# EUROPEAN PATENT APPLICATION

(11) **EP 1 220 529 A2**
(43) Date of publication of application: **03.07.2002**
(21) Application number: 01125474.5
(22) Date of filing: 06.11.2001
(51) Int. Cl.: H04N 1/32

(54) **System and method for generating logo data, and data storage medium**

(30) Priority: 28.12.2000 JP 2000403296
(71) Applicant: SEIKO EPSON CORPORATION, Shinjuku-ku, Tokyo 163-0811 (JP)
(72) Inventor: Kitahara, Katsuhito, Suwa-shi, Nagano-ken 392-8502 (JP); Horiuchi, Yukiharu, Suwa-shi, Nagano-ken 392-8502 (JP); Yokoyama, Kazuyuki, Suwa-shi, Nagano-ken 392-8502 (JP)
(74) Representative: Hoffmann, Eckart, Dipl.-Ing.

(57) **Abstract**

A logo data generating system and method easily generate logo data suitable for storage to and output by a particular target printer (19) without requiring a complicated process defining the image processing and data communication parameters. An input unit (15) enables inputting control data including various settings and model ID data for identifying the model of the target printer (19). A source image capturing unit (11) obtains the source data used to generate the logo data. A storage means (12) stores the model-specific data. A main controller (17) reads model-specific data for the target printer (19) identified by the model ID data, and sets control data including part or all of the settings for logo data generation. A data processor (13) generates the logo data by processing the source data based on the settings data defined by the input means (15) or the model-specific data setting means. Specific control data is thus set automatically based on the model-specific data.

## Description

The present invention relates to a system and a method for generating logo data to be stored in and printed by a printer.

Modern POS systems combine the functionality of conventional cash registers with functions for collecting and analyzing information related to the purchased products. They are widely used in the sales and distribution industry. A POS system typically consists of a server or central computer for serving, collecting and analyzing data, and a number of POS terminals connected to the server or central computer. Each POS terminal itself is also a system and typically consists of a host computer (simply referred to as "host" hereinafter) for local data processing operations, a display device, a scanner for reading product bar codes, a cash drawer, and a printer (POS printer).

POS printers are used to print, among others, receipts listing the names of the purchased products, their quantity, the unit price and the sum total. In addition to this information POS printers sometimes print a logo containing the name of the store or company and an identifying brand mark on the receipts. The logo can also contain image information such as an illustration, a product picture, and a graphic design of the product name. This logo printing function can be used to print advertisements containing text and/or images on the receipts so that receipts can also be used as an advertising medium or sales promotion medium.

Logos that are printed on a receipt are typically composed of digital image data (referred to as the "logo data" hereinafter). The amount of logo data required to represent a digital image is generally relatively large, which means that the effective printer throughput is reduced when the logo data is sent from the host to the printer each time a receipt is printed.

When the POS printer is a color printer, the color logos can be printed for even greater advertising effect. The amount of logo data for a color image is even larger than that for a black and white image. Hence, even more time is required for processing the image, receiving the logo data by the printer, and printing it, resulting in an even lower printing speed and throughput. Contrary to this, fast printing is essential at POS terminals because the time needed to register the purchased products, issue a receipt, and complete transactions at the point of sale should be as short as possible.

To allow for high-quality logo printing including printing of color logos without sacrificing a short processing time at the POS terminal, it is common to store the logo data in the printer so that only a logo print command but not the logo data need to be sent to the printer each time a logo is to be printed. This allows achieving high speed printing by saving the time required to transmit the image data each time again. The logo data is usually stored in the printer in a memory (a logo data registration or storage device).

The size of the printing paper, the print resolution, and communication parameters differ greatly among various models of POS printer. With color POS printers the number and kinds of available colors (referred to below as the "printable colors") differ from model to model; even in printers of the same model the colors can be different. It is therefore necessary to generate the logo data so that it conforms to the model of POS printer with which the data is to be used, i.e., model-specific printer specifications such as the print resolution, printable colors, the width of the paper etc. need to be considered in the preparation of the logo data. The logo data is therefore generated by first creating basic image data (the "source data" below), and then adjusting the size, color, resolution, and other features of the source data according to the model-specific printer specifications of the target printer. The resulting logo data is then stored in the POS printer using a logo data registration tool.

It is, therefore, necessary to define image processing parameters such as the model-specific printer specifications for the target printer, a color reduction method, and a color assignment for the process of generating the logo data from the source data. In this context, "color reduction method" means the method of reducing the number of colors included in the source data to the number of printable colors if the latter is smaller than the former. "Color assignment" means the selection of a (respective) substitute color for color(s) of the source data not available in the target printer. The source data are then subjected to a specific image processing using those image processing parameters. The communication parameters of the target printer have to be set when the logo data is sent to the printer. If these settings are incorrect, problems such as a failure in registering or printing the logo may occur. Even if the same logo data is registered in multiple identical printers, it is necessary with the method of the prior art to define the above image processing parameters individually for each target printer to which the logo data is to be registered, thus requiring much time and an overly complex procedure.

With a more extended use of POS printers capable of printing color logos they will be more commonly used to print product advertisements, product and service coupons, and other such information on receipts. Because such advertisements and announcements change frequently it is also expected that, unlike the situation with conventional store logos, it will be necessary to frequently create new logo data reflecting those frequent changes.

There is, therefore, a need for an easy and quick way of generating, editing and changing such logo data.

The present invention is directed to resolving the problems described above, and an object of this invention is to provide a system and a method for generating logo data quickly and easily for registration in a printer. A further object is to provide a data storage medium carrying a computer program containing code for executing the method of the invention.

This object is achieved with a logo data generating system as claimed in claim 1, a method as claimed in claim and a data storage medium as claimed in claim

To achieve this object, model-specific data containing printer-specific information such as the printing paper size, print resolution, and printable colors are stored for a variety of printer models, and the logo data are created by setting the image processing parameters based on stored model-specific data selected in accordance with the printer model for which the logo data are generated. Based on the stored model-specific data, the generated logo data can be stored directly in the target printer, or can be saved on some storage means in a format enabling the logo data to be stored in the printer.

Model identification data (model ID data) identifying the model of a particular target printer can be input by a user through input means or, in one embodiment, can be read automatically from the target printer. The model-specific data can be defined as desired to, for example, determine the number of colors that the target printer can print and the print resolution of the target printer. This eliminates the need to manually input the target printer characteristics when generating the logo data, and thus makes it possible to quickly and accurately set the image processing parameters for logo data generation.

Preferably, only model-specific data can be input via the input means that can be identified by the prestored model identification data. This reduces the possibility for data input errors. Input is preferably disabled for some or all input items for which setting is not required, based on previously input or set control data. This assures more accurate data input because inputting erroneous control data based on control data input from the input means is suppressed.

Yet further preferably, some or all control data are initialized to a respective specific value, and these specific values can be changed based on input from the input means or setting by the model-specific data setting means. Image processing can thus be performed based on the initialization values without requiring control data input.

Yet further preferably, the input means enables specifying the ink colors printable by the target printer and/or the target printer print resolution. Logo images conforming to the ink colors that can actually be printed by a color logo printer can thus be created.

Yet further preferably, the data processing means assigns colors in the source data to the specific colors printable by the target printer based on the model-specific data and settings data from the input means. This makes it possible to freely assign the colors of a full color source data image to the colors that can be printed by the printer, and thus enables color assignments achieving the most desirable printed logo.

Yet further preferably, the model-specific data stored in the model-specific data storage means includes communication parameters for each printer model, and the model-specific data setting means can set communication parameters for sending logo data to the target printer based on the model-specific data. This makes it easier to input the communication parameters for storing logo data to the printer.

Yet further preferably, the logo data generating system also has a means for outputting the generated logo data. This output means can output a file containing a printer registration command for storing the logo data in the target printer, a data transmission command for sending the printer registration command and the logo data to the printer, and the logo data. This makes it possible to easily register the logo data in the target printer.

Yet further preferably, the logo data generating system has a means that can output the generated logo data with a data transmission command for sending a printer registration command for storing the logo data in the target printer and the logo data to the printer, and is able to send the logo data and printer registration command to the target printer. This makes it possible to store the logo data directly to the target printer.

Yet further preferably, the input means has a graphical user interface input function. This makes it easier for the user to input settings data.

Yet further preferably, the input means does not display some or all input items for which setting is not required based on input or set control data. This simplifies the display screen and thus simplifies operation and data input errors.

Yet further preferably, the logo data generating system has a display means able to display an image based on the source data and an image after processing by the data processing means. This enables image processing parameters to be set while referring to both the source data image and the logo data print image.

Yet further preferably, the display means displays the source data image and image after data processing aligned for comparison on one side of the display means. This makes appropriate image processing easier because the settings can be input while comparing the images.

Other objects and attainments together with a fuller understanding of the invention will become apparent and appreciated by referring to the following description of preferred embodiments taken in conjunction with the accompanying drawings, in which:
- Fig. 1: is a function block diagram of a system according to a first embodiment of the present invention;
- Fig. 2: is a function block diagram of a system according to a second embodiment of the present invention;
- Fig. 3: is a function block diagram of the data processor in Fig. 1 or Fig. 2;
- Fig. 4: is a flow chart of a logo data generating method according to a preferred embodiment of the present invention;
- Fig. 5: is a flow chart of the model-specific data reading and setting step (S2) in Fig. 4;
- Fig. 6: is a flow chart of the image processing step (S3) in Fig. 4;
- Fig. 7: is a flow chart of the output step (S4) in Fig. 4; and
- Fig. 8: shows an example of a main editing screen presented in a logo data generating system according to a preferred embodiment of the invention.

### Embodiment 1

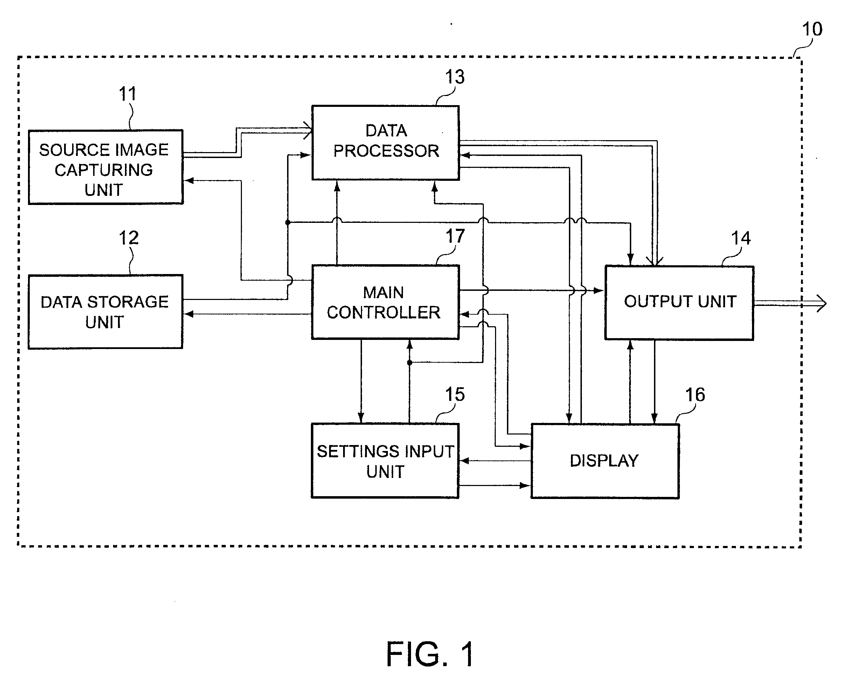

Fig. 1 is a block diagram showing the functions of a logo data generating system 10 according to a first embodiment of this invention. As shown in Fig. 1 system 10 has a source image capturing unit 11, a storage unit 12 for storing model-specific data, a data processor 13, an output unit 14, an input unit 15, a display 16, and a main controller 17 for controlling these units. It is to be noted that the term "unit" as used to denote a block in a function diagram in this text does not necessarily mean a self-contained or separate unit. Instead, two or more "units" may be implemented as a combined unit, e.g., a program-controlled data processor.

The logo data is created from source data normally stored on a hard disk or other storage device (not shown in the figures) provided externally to the logo data generating system 10. Unit 11 reads the source data from wherever it is stored under the control of the main controller 17. For example, when the user specifies a desired source data file, the main controller 17 instructs the unit 11 to capture the data from that file. The captured source data is then stored in the unit 11. The source data can be kept stored temporarily only until the logo data have been generated, or can be kept for a longer period if it will be used again to create different types of logo data based on the same source data.

Two general types of file are used to store the source data. One type are files having a particular format (referred to herein as "ELF files") created by a logo data editing system (not shown in the figures). The logo data editing system, which is subject of a separate invention, can combine multiple images together with text in a single ELF source data file. The other type are bitmap files and files in other common image file formats.

Sets of model-specific data each set corresponding to a different printer model are stored in storage unit 12. As explained before, a set of model-specific data includes the name of the printer model, usable paper sizes (paper width in particular), printable colors, vertical print resolution, horizontal print resolution, communication parameters such as the port, baud rate, bit length, parity check, flow control specific to a particular model.

This first embodiment will be described using a printer with two printable colors, a first color and a second color. The invention can be applied to a printer with three or more printable colors, and also to monochrome printers, however.

Controlled by the main controller 17, the data processor 13 reads the source data stored in unit 11, and reads the model-specific data from storage unit 12 to determine the image processing parameters. As an alternative, the main controller 17 itself could read the model-specific data from storage unit 12, determine the image processing parameters and set these parameters in the data processor 13. In this latter case the controller 17 functions as means for setting the model-specific data. The data processor 13 then processes the source data or source image according to a selected set of model-specific data and settings entered via the input unit 15 to generate the logo data. Model identification data (model ID data) specifying the target printer model is required to select the appropriate set of model-specific data among the sets stored in storage unit 12. The model ID data and control information with the settings used to determine the image processing parameters can be input via the input unit 15.

Data processor 13 counts the number of pixels and adjusts or changes (if required) the number of pixels and the color information according to the model-specific data. For example, if the print resolution of the printer is lower than the resolution of the source data, the printed image will be larger than expected if, without conversion, all pixels of the source data are printed. The area of the printed logo on the receipt will therefore differ from what is was intended to be, and may even extend beyond the edge(s) of the paper. In such case, it is therefore necessary to reduce the image (that is, reduce the pixel number), at least if the paper width used for the printing in the target printer would not be sufficient to accommodate the enlarged logo.

If the printer has only two printable colors (as that assumed for the present embodiment) and the source data has more colors, a color reduction process is needed to assign each color of the source data to one or the other of the two printable colors. The color assignment process can be initialized to particular printable colors and printable color assignments, which are then set automatically based on the model-specific data when the logo data is produced. The user could also define the color assignments as desired rather than using such default settings. In general the colors actually printed by a two color printer can be controlled by simply changing the ink cartridges, for example. This means that while the model-specific data indicates that the printer can print two colors, which colors are actually printed can be freely selected when the logo data is created.

Designing the logo data generating process to automatically set minimum image processing parameters according to the printer model based on the model-specific data means that the user does not need to individually enter detailed printer information each time logo data is edited; this reduces input errors and makes the operation easier for the user. This also prevents, for example, that logo data are mistakenly processed the for printing on a two-color printer when the target printer actually is a monochrome printer, or that, due to a wrong print resolution setting, a logo too big to be printed on the paper is created. Furthermore, if it is desired to change the color reduction method for a particular object in existing logo data, the corresponding editing process could be entered immediately by simply inputting the model ID data. Similarly, if the user wants to change the color of a particular object, or change the halftone process or gray scale process, the corresponding editing process can be started immediately by simply inputting the model ID data. By thus automatically setting the image processing parameters, it is possible to make minor final changes to essentially completed logo data, make changes to completed logo data, and generate the initial logo data, by simply specifying the printer model without manually inputting the detailed settings.

The logo data must be sent to the printer in order to be stored in the printer. Therefore it is also necessary to set the printer communication parameters. As mentioned above, in the present embodiment, the model-specific data in storage unit 12 includes parameters, which are sent to the main controller 17 or to the output unit 14 to set the parameters. Minimal input from the user is therefore required. Setting the printer communication parameters is complicated and requires special knowledge. It is therefore particularly advantageous if the communication parameters are set automatically based on the model-specific data. If the output unit 14 generates an executable file as described below, the logo data can be registered by simply opening this file on the host to which the target printer is connected provided the communication parameters are embedded in file.

The output unit 14 can store the logo data obtained from the data processor 13 as an executable file containing the logo data, a command causing the printer to store the logo data, and a program for transferring the logo data and the command to the target printer after having set the communication data required for the transfer and preferably included in the executable file. The logo data can also be stored as a bitmap data file (which requires conversion into the bitmap format if the logo data as processed are not in the bitmap format).

The resulting logo data and executable file can be stored in a memory (not shown) in the output unit 14 or elsewhere in the system 10 or in an external storage device (not shown). The stored logo data can also be used as source data to create new or changed logo data. When a new printer model is introduced, for example, existing logo data can be easily converted to logo data appropriate for the new model by simply setting the model-specific data for the new printer model.

By providing a function for easily setting the data processing parameters needed to create logo data and the communication parameters for registering the logo data in a printer, this embodiment of the invention makes it possible to quickly and easily create logo data to be stored in a printer and enables the logo data to be quickly sent to the printer.

### Embodiment 2

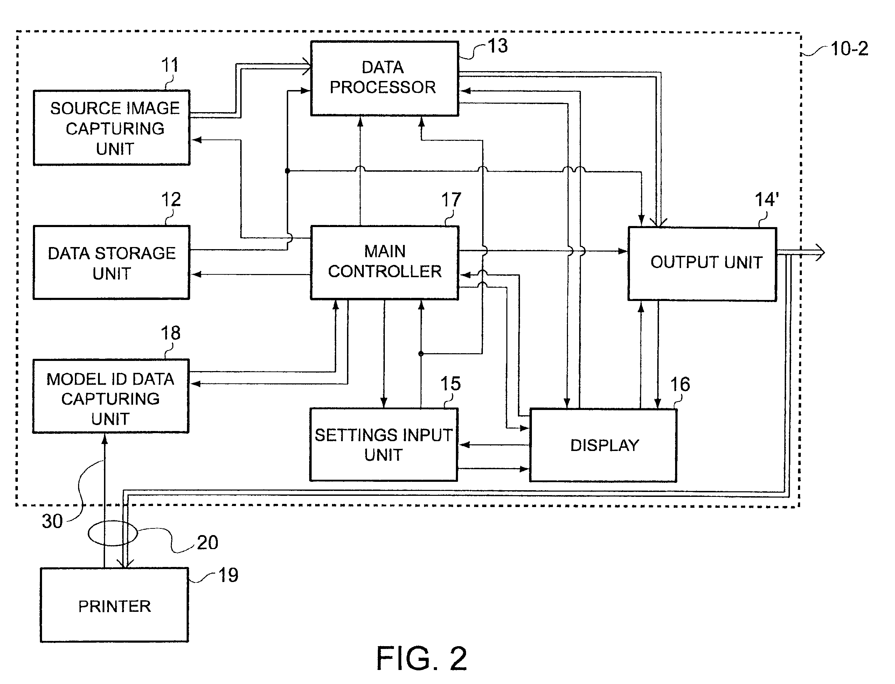

Fig. 2 is a block diagram showing the functions of a logo data generating system 10-2 according to a second embodiment of the present invention. Like parts in Figures 1 and 2 are identified by like names and reference numerals. The system 10-2 of this second embodiment differs from system 10 by a model ID data capturing unit 18 that is additionally provided and is connected to the printer 19 via a communication bus 20. In the first embodiment, the target printer is specified by the user inputting corresponding model ID data. In this second embodiment, the model ID data is stored in the printer itself so that it can be read directly from the printer 19. The system 10-2 employs unit 18 for reading the model ID data from the printer 19 as is indicated by at 30 in Fig. 2.

The main controller 17 identifies the printer 19 model from the read model ID data. Based on the identified printer model, the main controller 17 then reads the appropriate model-specific data from the storage unit 12 and sets up the data processor 13.

If the model ID data cannot be read by the unit 18 (for instance, because the target printer is not connected/available when the logo data are generated), the model ID data can still be input by the user as described in the first embodiment.

In addition to storing the logo data as an executable file or a bitmap file as in the first embodiment, the output unit 14' in this second embodiment is preferably capable of sending the logo data output by the data processor 13 and a command for storing it to the printer via the communication bus 20. The output unit 14' having this extended function could be used in the first embodiment as well, instead of output unit 14, and the system 10 could be connected to the target printer with a communication cable.

The structure and functions of the units 11, 13, and 15, and the display 16 in this second embodiment are identical to those in the first embodiment.

The communication bus 20 should be understood to be representative for any kind data communication link that allows exchanging data between the system 10-2 (or 10 with 14') and the printer, e.g., a serial cable, a parallel cable, a LAN or WAN network connection, a USB cable, etc. Moreover, the communication link is not be limited to a physical communication cable. For example, a wireless communication link based on IR (including IrDA (Infrared Data Association) or radio transmission, and wireless LAN technologies using spread spectrum communication, could be used to connect the printer.

Fig. 2 shows a single printer 19 connected to the system 10-2. A POS system, however, typically has multiple printers. Multiple printers could therefore be connected via a LAN so that the model ID data can be read from and the completed logo data sent to each of the printers.

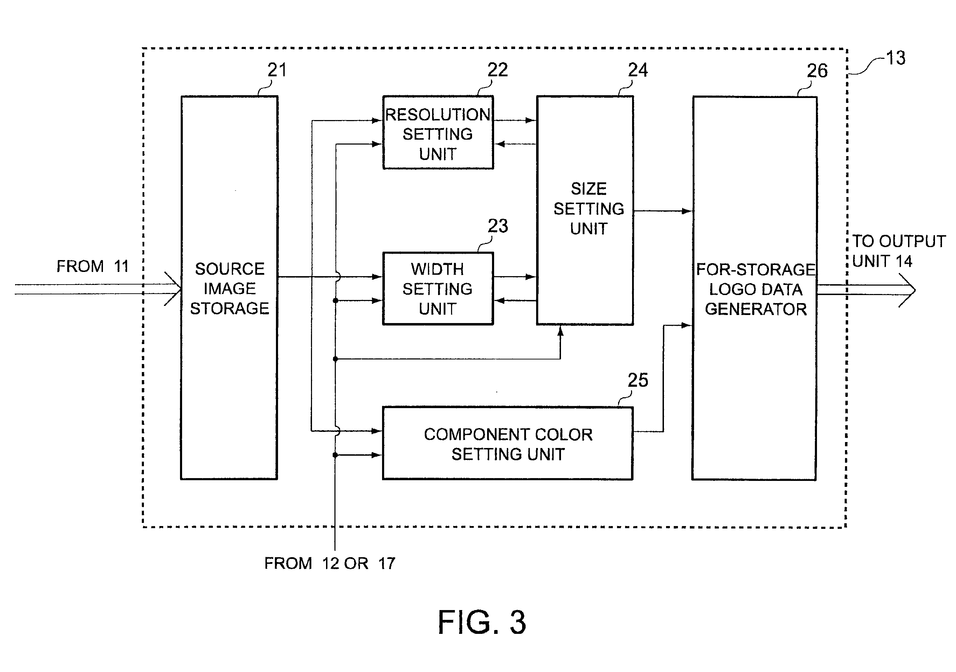

The functions of the data processor 13 are described in further detail below with reference to Fig. 3. Fig. 3 is a function block diagram of the data processor 13 shown in Figs. 1 and Fig. 2. As shown in Fig. 3 the data processor 13 has a source image storage 21, a resolution setting unit 22, a width setting unit 23, a size setting unit 24, a component color setting unit 25, and a logo data generator 26.

The source image storage 21 reads and stores the source data for image processing from the source image capturing unit 11 (Fig. 1 or Fig. 2). The resolution setting unit 22 processes the source data so that the resolution conforms to the print resolution defined in the model-specific data, and the width setting unit 23 adjusts the source data so that the width of the logo will conform to the width of the paper used in the printer as defined in the model-specific data. The size setting unit 24 controls image processing by the resolution setting unit 22 and width setting unit 23, combines the results of their processes and confirms that the final size of the source data conforms to the paper size of the printer. The component color setting unit 25 converts, if necessary, the color data of the source data so as to be compatible with the printable colors defined in the model-specific data. This conversion applies, for example, to color reduction, brightness, and gray scale level. Based on the image processed source data output from the size setting unit 24 and component color setting unit 25, the logo data generator 26 generates the logo data. The resolution setting unit 22, width setting unit 23, size setting unit 24, and component color setting unit 25 are shown in Fig. 3 as the means for setting the model-specific data, but it will also be apparent to those skilled in the art that additional means can be provided or one or more of these could be omitted.

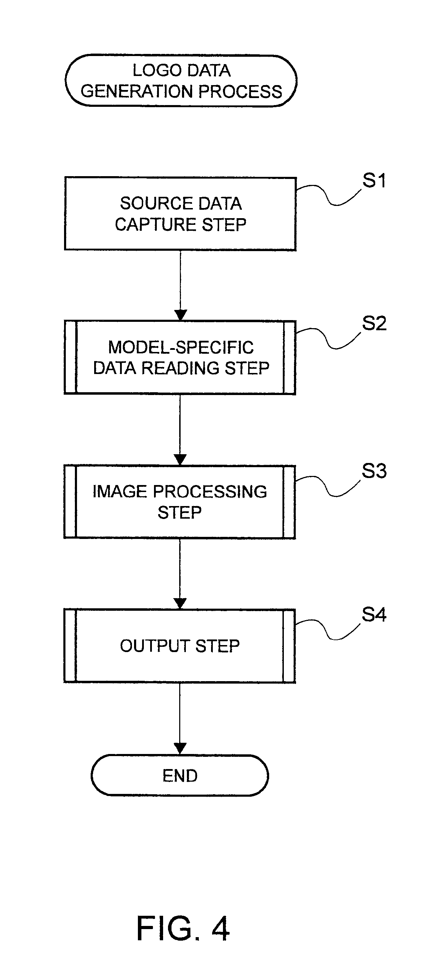

Fig. 4 is a flow chart of a logo data generating method according to a preferred embodiment of the invention.

In step S1, this method captures and stores the source data used to generate the logo data. In step S2 the appropriate model-specific data for the target printer are read based on the model ID data. In step S3 the logo data are generated by processing the source data based on the model-specific data read in step S2. Finally, S4 outputs the resulting logo data.

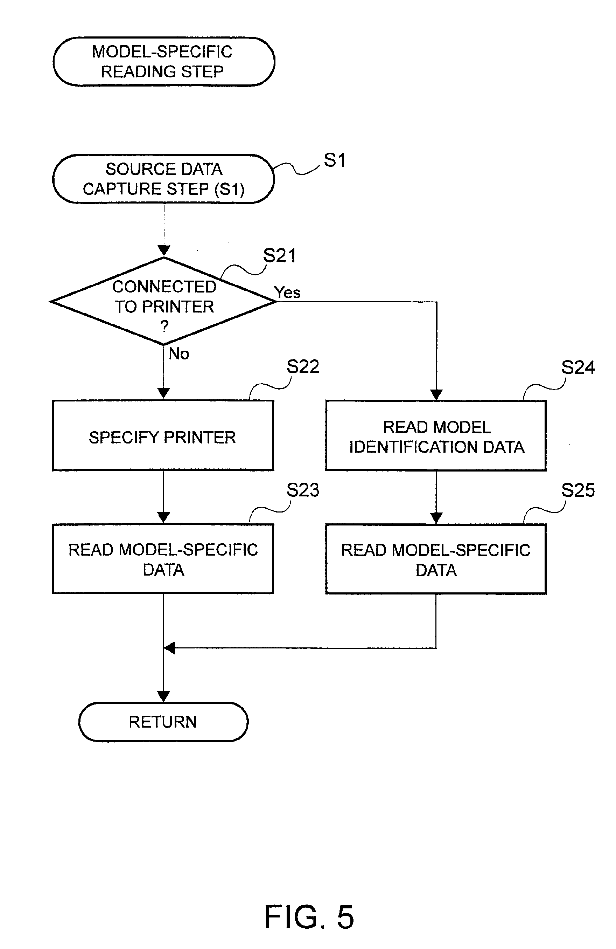

A preferred embodiment of step S2 in Fig. 4 is described in further detail with reference the flow chart in Fig. 5.

Which steps are executed following step S1 in Fig. 4, is decided in step S21 depending on whether or not the target printer is connected to the system 10-2 (Fig. 2). If the printer is not connected (S21 returns *No*), steps S22 and S23, otherwise steps S24 and S25 are executed. It will be appreciated that steps S21, S24 and S25 are not required for the first embodiment that has no means to read the model ID data from the printer even if the printer is connected. In step S22 the main controller reads the model ID data that is input by the user of the system at the input unit 15. The main controller 17 (Figs. 1 and 2) then determines the printer model based on the supplied model ID data, reads the corresponding model-specific data, and applies the settings to the data processor 13 in step S23.

In the second embodiment according to Fig. 2, if the printer is connected (S21 returns *Yes),* the model ID data stored in the printer 19 (Fig. 2) is read by the unit 18 (Fig. 2) in step S24. The main controller 17 (Fig. 2) then determines the printer model based on the model ID, reads the corresponding model-specific data, and applies the settings to the data processor 13 (Fig. 2) (step S25).

Once the model-specific data has been read (step S22 or step S24) and the settings have been completed (step S23/S25), control advances to step S3 in Fig. 4. Note that it is also possible to omit steps S21, S24 and S25 and to proceed directly to step S22 so that the user has to input the model ID data even when a printer is connected.

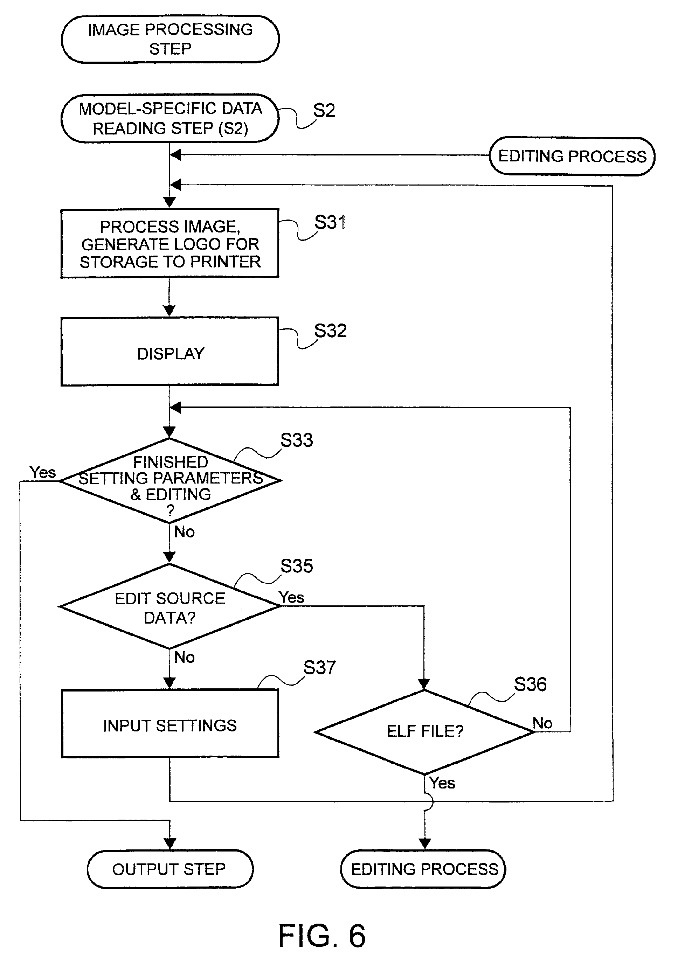

A preferred embodiment of the image processing step S3 in Fig. 4 is described in further detail with reference to the flow chart in Fig. 6.

When the model-specific data have been read and set in step S2, the logo data is generated by processing the source data to adjust the width, resolution, and colors of the source data, for example, to the width of the paper used by the printer, the print resolution, and the printable colors defined in the model-specific data (step S31).

A print image of the logo data is then presented on the display 16, and the source data captured in step S1 is also displayed at this time. The user is thus given the opportunity to preview the print image of the logo data on the display and accept it or decide that further manual adjustment of the logo image is required or further editing of the source data by a logo data editing system (not shown in the figures) is required. The user can enter his selection at input unit 15.

Step S33 reads the user input and, from that, decides whether the logo is accepted and the editing process, thus, completed or not. If step S33 reveals the user decided not to accept the logo data (step S33 returns *No*), further editing of the logo data or editing of the source data is needed. The method then reads in step S35 another user input to determine from that whether the source data are to be edited. If yes, (step S35 returns *Yes),* the user of the system confirms whether the source data is an ELF file. If the source data is an ELF file (step S36 returns *Yes),* control is passed to a logo data editing screen (not shown in the figures) of the logo data editing system mentioned above that allows editing the source data. Note that "editing" as used here means to change part of the source image represented by the source data by, for example, changing the background of the source image to a different background. When editing is completed the changed source data is saved by the logo data editing system as ELF file. The changed logo data is then loaded again into the system 10 (10-2), the procedure starts from step S31 again and new logo data reflecting the edited source data is generated.

If the source data is not an ELF file (step S36 returns *No),* the procedure loops back to step S33 to check user input again and decide from that whether editing the logo data is completed (S33). If the user input indicates editing the logo data is to be continued (S33 returns *No)* and step S35 also returns *No,* the settings for the next pass through the image processing are read from input unit 15 (step S37). The color reduction process, printable colors, color assignment, brightness adjustment, gray scale adjustment, and other image processing parameters can be set at the input unit and are read in step S37. Once the settings are completed, the procedure loops back to step S31 and the logo data is processed according to the new settings.

A preview of a print image of the resulting logo data is then displayed (step S32) and the procedure involving step S33 and S35 to S37) explained above is repeated until step S33 returns *Yes* in response to user input accepting the displayed logo data; the procedure then advances to the output step (S4 in Fig. 4).

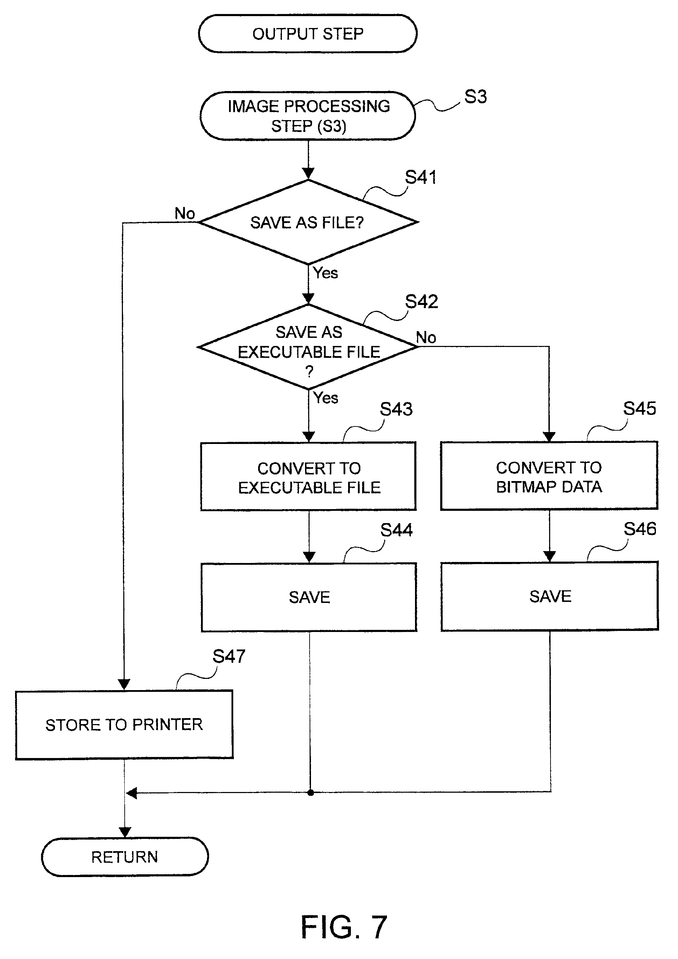

A preferred embodiment of the output step S4 in Fig. 4 is described next with reference to the flow chart in Fig. 7.

In this embodiment of the invention, the user of the system can select whether or not the generated logo data should be sent to the printer directly (provided the target printer is connected) or the logo data should be saved to a file. In the latter case the user can select the output format of the file. The user enters the respective selection at the input unit 15.

More specifically, the output step first determines based on user input detected from input unit 15 whether to output directly to the target printer or to save the logo data to a file (step S41). If saving the logo data to a file is selected (step S41 returns *Yes),* the user is prompted to input whether to save the file as an executable file or as a bitmap file (step S42).

If the user chooses the executable file (step S42 returns *Yes*), an executable file containing the logo data, a command causing the target printer to store the logo data, and a program for sending the logo data and the command to the printer is created (step S43). The resulting executable file is then stored in the output unit 14 or in an external storage device (step S44), and the procedure ends.

If the user chooses the bitmap file (step S42 returns *No*), the logo data is converted to a bitmap format (step S45). The resulting file is then stored in the output unit 14 or in an external storage device (step S44), and the procedure ends.

If step S33 in Fig. 6 reveals the user indicated that logo data editing is finished and selected to store the logo data in the printer (step S41 returns no), the logo data and a command instructing the printer to store the logo data are sent to the target printer, the completed logo data is thus stored in the target printer (step S47), and the procedure ends.

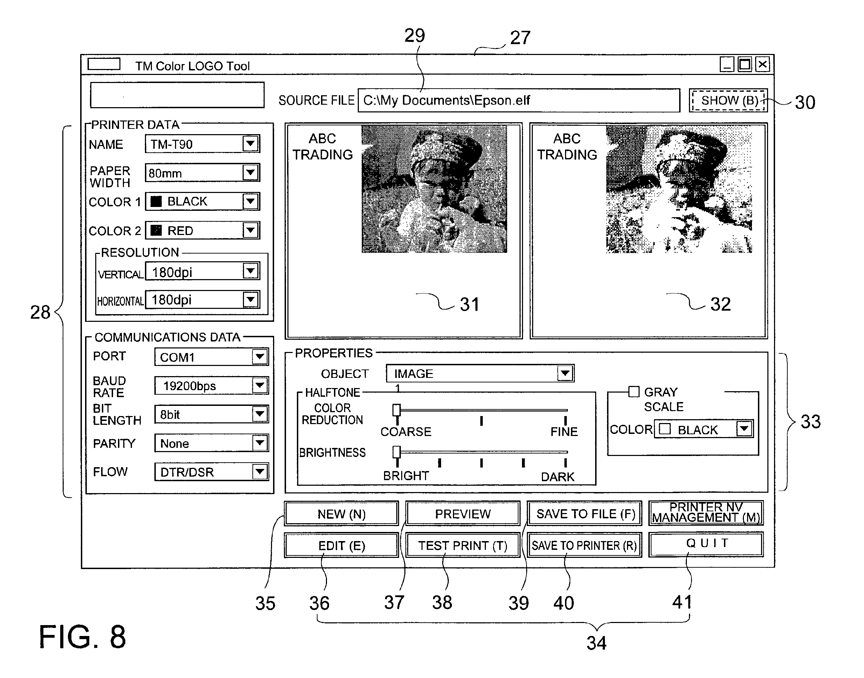

As will be appreciated by those skilled in the art, the invention explained so far can be implemented in various ways. One preferred way uses a general purpose computer or other data processing system and a graphical user interface (GUI) presented on the display 16, e.g. a CRT monitor or a flat panel display. Fig. 8 shows an example of the main logo data editing screen in accordance with such implementation of the present invention. The main logo data editing screen 27 is controlled by the input unit 15 and display 16.

The main logo data editing screen 27 shown in Fig. 8 has a model-specific data setting section 28 for entering model ID data for the target printer and model-specific data items such as the printable colors and communication parameters; a file selection box 29 for selecting or entering the file name of the file from which the source data is to be read; a button 30 that when selected presents a list of existing source data files; a source data display area 31 for viewing the source data image; a print image display area 32 for previewing the image processed logo data; a parameter selection section 33 for setting the image processing parameters; and various control buttons 34.

The model name of the target printer (model ID data), paper size (width), printable colors 1 and 2, vertical and horizontal print resolution, as well as the port number and other model-specific communication parameters that must be set according to the port like the baud rate, bit length, parity check, flow control settings can be entered at section 28. As mentioned before, the system automatically sets most of these settings and other settings to respective default values depending on model ID data. These default values may be overridden by user input.

Section 33 is used to control the specific image processing method by setting parameters such as the color reduction method, brightness, and gray scale level. These settings can be set using slider controls, for example. The color reduction slider can be used to adjust the color reduction process in three stages from "coarse" to "fine," corresponding to simple color reduction, dithering, and error diffusion, for example. Brightness can be controlled in five levels in this example.

If the source data is an image file, a check box (not shown in the figure) for running a process to adjust the source data to the width of the paper used by the printer could also be provided.

The control buttons 34 include a button 35 labeled NEW, a button 36 labeled EDIT, a button 37 labeled PREVIEW, a button 38 labeled TEST PRINT, a button 39 labeled SAVE TO FILE, a button 40 labeled SAVE TO PRINTER, and a button 41 labeled QUIT.

The NEW button 35 is used to edit a new source data file using the logo data editing system (not shown in the figure). If this button 35 is pressed while logo data are created, the logo data generation process is temporarily exited when step S36 Fig. 6 returns *Yes.* The EDIT button 36 is used to enter information as to whether or not source data in the ELF file format (step S35) is to be edited. The PREVIEW button 37 is used to preview the print image shown in the print image display area 32 in a separate window in real (1:1) size. The TEST PRINT button 38 is used to make a test print of the previewed logo data. The SAVE TO FILE button 39 is used to save the logo data as a bitmap file or executable file. The SAVE TO PRINTER 40 button is used to store the logo data directly in the target printer. The QUIT 41 button is used to terminate operation of the logo data generating system.

A program for implementing the logo data generating method described above includes an input control module for controlling input of command signals needed to generate the logo data and store the generated logo data; a display control module for controlling the display of information needed to generate logo data and store the logo data in a printer; a model-specific data reading control module for controlling reading the model-specific data for the target printer; a source data capture control module for controlling capturing the source data; a settings control module for controlling processing the source data to conform with the printer features and performance and thus generate the logo data; and an output control module for controlling output of the resulting logo data.

As mentioned already, the logo data generating system of this invention can be achieved using a general purpose computer or other data processing system. For example, a machine-readable data storage medium carrying the program described above could be read by the computer to install the program on the computer so that the computer can be used as the logo data generating system of this invention.

It is also possible to turn the settings for all image processing parameters based on the model-specific data off, have the user set all parameters, and process the logo data according to the user settings.

By storing the print resolution, printable colors, and other information specific to the target printer, reading this stored model-specific data based on input model ID data, and automatically setting the image processing parameters and communication parameters based on the model-specific data, the present invention provides a logo data generating system and logo data generating method that can quickly and easily generate logo data to be stored in the target printer, and can easily save the resulting logo data to the printer.

A program for the logo data generating method described above includes an input control module for controlling input of command signals needed to generate the logo data and store the generated logo data; a display control module for controlling the display of information needed to generate logo data and store the logo data in a printer; a model-specific data reading control module for controlling reading the model-specific data for the target printer; a source data capture control module for controlling capturing the source data; a settings control module for controlling processing the source data to conform with the printer features and performance and thus generate the logo data; and an output control module for controlling output of the resulting logo data.

The logo data generating system of this invention can be achieved using a general purpose computer, e.g., a personal computer or host computer connected to a printer, or other data processing system. For example, a data storage medium recording the program described above could be read by the computer system to install the program on the computer so that the computer can be used as the logo data generating system of this invention. The data storage medium may include any known computer-readable medium for storing a program and may include, for example, a floppy disk, hard disk, CD-ROM, or other such storage medium, a network signal that may be transmitted over the Internet, or other electromagnetic carrier wave signal. The source data of the image data supplied to the printer for printing the logo can also be stored on any such computer-readable medium.

The memory for storing the printer model name and model-dependent attributes, such as the number of printable colors, print resolution, and paper width is preferably non-volatile storage, such as a hard disk or flash memory in a host computer.

The selection unit for selecting a printer model from memory controls selection of a model name displayed on a CRT, LCD or other display unit of a host computer using a mouse, keyboard, or other input device.

The logo data generating unit for processing the source data to create logo data for printing based on the model name of the target printer selected by the selection unit and the number of printable colors, print resolution, and paper width attributes of the selected target printer is controlled by a controller in the host computer.

## Claims

1. A system for generating logo data to be stored in and printed by a printer, comprising:
input means (15) enabling input of control data including specific settings data and model ID data identifying the printer model of the target printer (19) in which the logo data is to be stored;
source data capturing means (11) for obtaining source data used to generate the logo data;
first storage means (12) for storing respective model-specific data for a plurality of printer models;
setting means (13, 17) for reading the model-specific data for the target printer (19) identified by the model ID data and for setting said control data including all or part of said settings data to respective default values based on the model-specific data;
data processing means (13) for generating the logo data by processing the source data in accordance with the settings data defined by the input means (15) and/or the model-specific data setting means (13, 17); and
second storage means (26) for storing the logo data generated by the data processing means (13).

2. The system of claim 1, wherein the control data enterable by means of the input means (15) is limited to model-specific data that can be identified by the model ID data.

3. The system of claim 2, wherein the input means (15) is adapted to disable input of some or all input items for which setting is not required based on previously input or set control data.

4. The system of claim 3, wherein some or all control data are initialized to a respective specific value, and that specific value can be changed based on input from the input means (15) or setting by the model-specific data setting means (13, 17).

5. The system of claim 4, wherein the input means (15) is adapted to enable specifying colors available for printing in the target printer (19) and/or the print resolution of the target printer (19).

6. The system of claim 5, wherein the data processing means (13) is adapted to assign source data colors to specific colors printable by the target printer (19) based on the model-specific data and settings data from the input means (15).

7. The system of claim 6, wherein the model-specific data stored in said first storage means (12) includes communication parameters for each printer model, and
the setting means (13, 17) is adapted to set communication parameters for sending logo data to the target printer (19) based on the model-specific data.

8. The system of any one of the preceding claims, further comprising output means (14) for outputting the generated logo data, the output means (14) being able to output a file containing a printer registration command for storing the logo data in the target printer (19), a data transmission command for sending the printer registration command set and logo data to the printer, and the logo data.

9. The system of any one of the preceding claims, further comprising output means (14') for outputting the generated logo data, the output means (14') being adapted to send the logo data and a command that causes the target printer (19) to store the logo data to the target printer (19).

10. The system of any of claims 1 to 9, wherein the input means (15) has a graphical user interface input function.

11. The system of claim 10, wherein the input means (15) does not display some or all input items for which setting is not required based on input or set control data.

12. The system of claim 11, further comprising a display means (16) able to display an image based on the source data and an image based on the data after processing by the data processing means (13).

13. The system of claim 12, wherein the display means (16) is adapted to display said images aligned for comparison on one side of the display means (16).

14. A method of generating logo data to be stored in and printed by printer, comprising:
(a) obtaining source data;
(b) receiving control data including specific settings data for generating the logo data and model ID data identifying the printer model of the target printer (19) in which the logo data is to be stored;
(c) reading, based on the model ID data, model-specific data for the target printer (19) from first storage means (12) storing respective model-specific data for a plurality of printer models;
(d) generating logo data by processing the source data obtained in step (a) based on the model-specific data read in step (c) and/or control data received in step (b); and
(e) storing the generated logo data in second storage means (26).

15. The method of claim 14, wherein step (d) assigns source data colors to specific colors printable by the target printer (19) based on said model-specific data and said settings data received in step (b)

16. The method of claim 15, wherein step (d) converts the size of image represented by the source data and the resolution of that image to the paper width and print resolution, respectively, usable by the target printer (19) as specified in the model-specific data.

17. The method of any of claims 14 to 16, wherein step (b) employs a graphical user interface to receive said control data.

18. The method of claim 17, further comprising
(f) outputting the generated logo data as an executable file containing the logo data and a data transmission program for sending the logo data and a command causing the target printer (19) to store the logo data to the target printer (19).

19. The method of claim 17 or 18, further comprising
(g) sending the logo data and a command causing the target printer (19) to store the logo data directly to the target printer (19).

20. A data storage medium readable by a machine and carrying a program of instructions for execution by the machine to perform a method according to any one of claims 14 to 19.

21. A logo data generating system, comprising:
memory (12) for storing a printer model name and number of printable colors, print resolution, and paper width attributes of the printer model;
a reading unit (11) for reading source data to obtain image data provided for printing as logo data;
a display unit (16, 17) for reading and displaying the printer model name, number of printable colors, print resolution, and paper width attributes stored in memory;
a selection unit (15) for selecting a target printer for printing out the logo data from among the printer model names displayed on the display unit; and
a logo data generating unit (13) for processing the source data to create logo data for printing based on the model name of the target printer selected by the selection unit and the number of printable colors, print resolution, and paper width attributes of the selected target printer.

22. The system of claim 21, further comprising a data transmission unit (14; 14') for sending the logo data generated by the logo data generating unit to the target printer (19).

23. The system of claim 21 or 22, further comprising a second memory (14; 14) for storing the logo data generated by the logo data generating unit.
